# EUROPEAN PATENT APPLICATION

(11) **EP 3 720 081 A1**
(43) Date of publication of application: **07.10.2020**
(21) Application number: 19167480.3
(22) Date of filing: 05.04.2019
(51) Int. Cl.: H04L 29/06, H04W 12/00

(54) **SYSTEM AND METHOD FOR PROCESSING A SOFTWARE APPLICATION ON A PORT**

(71) Applicant: Siemens Aktiengesellschaft, 80333 München (DE)
(72) Inventor: Xie, Xin, 76448 Durmersheim (DE)

(57) **Abstract**

The invention refers to a system (100) for processing at least one software application (200) via at least one port (300) with a port number (320), the system (100) comprising at least one server (400) and at least one client (500) which are connected to the port (300), wherein at least one first port generator (710) is installed directly on and/or remotely connected to the server (400) and at least one second port generator (720) is installed directly on and/or remotely connected to the client (500), wherein the first port generator (710) and the second port generator (720) are configured to generate based on a time information a new port number (370) for processing the at least one software application (200).

## Description

The present invention generally relates to a system for processing at least one software application on at least one port with a port number comprising a server and a client which are connected to the port.

In computer networking, a port is an endpoint of a communication between devices. Physical as well as wireless connections are terminated at ports of hardware devices. At the software level, within an operating system, a port is a logical construct that identifies a specific process or a type of network service. Ports are identified for each protocol and address combination by 16-bit unsigned numbers, commonly known as the port number. Inbound packets are received, and the port number in the header is used to decide which application is to be passed the packets. The software port is always associated with an IP address of a host and the protocol type of the communication. It completes the destination or origination network address of a message.

Ports provide a multiplexing service for multiple services or multiple communication sessions at one network address. Specific port numbers are commonly reserved to identify specific services. The lowest numbered "1024" port numbers are called the well-known port numbers, and identify the historically most commonly used services. In the client-server model of application architecture, a multiplexing service is established, so that multiple simultaneous communication sessions may be initiated for the same service. The most commonly used protocols that use ports are the Transmission Control Protocol (TCP) and the User Datagram Protocol (UDP).

Hypertext Transfer Protocol Secure (HTTPS) is an extension of the Hypertext Transfer Protocol (HTTP). It is used for secure communication over a computer network, and is widely used on the Internet. In HTTPS, the communication protocol is encrypted using Transport Layer Security (TLS), or, formerly, its predecessor, Secure Sockets Layer (SSL). The protocol is therefore also often referred to as HTTP over TLS, or HTTP over SSL. The principal motivation for HTTPS is authentication of the accessed website and protection of the privacy and integrity of the exchanged data while in transit. It protects for example against man-in-the-middle attacks.

Software applications are processed on static ports. It is only possible to map a port A to another port B. For example, a Secure Shell (SSH) original TCP port has the number "22", then an administration expert can map the port "22" to the port "2022". Secure Shell (SSH) is a cryptographic network protocol for operating network services securely over an unsecured network. Typical applications include remote command-line login and remote command execution, but any network service can be secured with SSH. In a similar way the administration expert can switch a HTTPS port "443" to the port "8081". By this approach, a person who wants to manipulate (hacker) cannot find immediately the port where he can trigger an attack.

It is therefore an object of the present invention to improve the security of a software application processed on a port.

According to a first aspect, the invention provides a system for processing at least one software application via at least one port with a port number comprising a server and a client which are connected to the port. At least one first port generator is installed directly on and/or remotely connected to the server and at least one second port generator is installed directly on and/or remotely connected to the client, wherein the first port generator and the second port generator are configured to generate based on a time information a new port with a new port number for processing the at least one software application.

Preferably, the first port generator and the second port generator generate the new port number based on the same and/or identical time information. On the server, more than one first port generator can be installed, for example for connecting to multiple clients. Similarly, more than one second port generator can be installed on the client.

The invention provides a dynamic port assignment so that a software application can run independently of predefined ports. The predefined port is replaced by a new port with a new port number which is different from the previous port number. Therefore, a software application is better protected as a third person does not know on which port the software application is processed.

In a further embodiment, the lifetime of the new port is in the range of between 1 and 20 minutes, preferably between 2 and 10 minutes, most preferably 5 minutes. This short time period increases the security level as it is difficult to find out the new port number in a limited time period.

Advantageously, a random string or seed with a serial number is generated and assigned to a user. As the string is generated randomly the serial number cannot be predicted. The assignment to a user allows the identification of the user when he starts processing the software application. Therefore, it is important that this assignment cannot be manipulated which can be prevented by using a random string.

In a preferred embodiment, the string with the serial number is installed at the first port generator on the server and at the second port generator on the client. The installation of a random string allows a further security level as the server and the client cannot generate the new port number only by themselves.

Preferably, the port generator on the server and the port generator on the client are configured to use the string for generating at the same absolute time the new port with the new port number. As the string is needed for the generation of a new port it cannot be predicted which port number will be generated by the first and second port generators. Furthermore, both the client and the server must generate the new port at the same absolute time. This prevents that a manipulation of the client for the generation of a new port could be successful.

Advantageously, the server and the client are connected by a connection, wherein the server and the client may be synchronized by using the connection.

In a preferred embodiment, a Time-Based One-Time Password algorithm (TOTP) is used as an algorithm for the port generators. TOTP is based on a Keyed-Hash Message Authentication Code (HMAC) and in cryptography an HMAC is a specific type of Message Authentication Code (MAC) involving a cryptographic hash function and a secret cryptographic key. TOTP is an algorithm to generate a one-time password without any connection to the network application itself. This increases the security level and protects the port generators against manipulations.

According to a second aspect, the invention provides a method for processing on a system at least one software application via at least one port with a port number, wherein the system comprises a server and a client which are connected to the port, comprising
- installing a first port generator directly on and/or remotely connected to the server and installing a second port generator directly on and/or remotely connected to the client;
- generating a new port with a new port number based on time information by the first port generator and the second port generator;
- processing the at least one software application on the new port with the new port number.

The invention provides a dynamic port assignment so that a software application can run independently of predefined ports. The predefined port is replaced by a new port with a new port number which is different from the previous port number. Therefore, a software application is better protected as a third person does not know on which port the software application is processed.

In a further embodiment, the lifetime of the new port is in the range of between 1 and 20 minutes, preferably between 2 and 10 minutes, most preferably 5 minutes. This short time period increases the security level as it is difficult to find out the new port number in a limited time period.

Advantageously, a random string or seed with a serial number is generated and assigned to a user. As the string is generated randomly the serial number cannot be predicted. The assignment to a user allows the identification of the user when he starts processing the software application. Therefore, it is important that this assignment cannot be manipulated which can be prevented by using a random string.

In a preferred embodiment, the string with the serial number is installed at the first port generator on the server and at the second port generator on the client. The installation of a random string allows a further security level as the server and the client cannot generate the new port number only by themselves.

Preferably, the port generator on the server and the port generator on the client are configured to use the string for generating at the same absolute time the new port with the new port number. As the string is needed for the generation of a new port it cannot be predicted which port number will be generated by the first and second port generators. Furthermore, both the client and the server must generate the new port at the same absolute time. This prevents that a manipulation of the client for the generation of a new port could be successful.

Advantageously, the server and the client are connected by a connection, wherein the server and the client may be synchronized by using the connection.

In a preferred embodiment, a Time-Based One-Time Password algorithm (TOTP) is used as an algorithm for the port generators. TOTP is based on a Keyed-Hash Message Authentication Code (HMAC) and in cryptography an HMAC is a specific type of Message Authentication Code (MAC) involving a cryptographic hash function and a secret cryptographic key. TOTP is an algorithm to generate a one-time password without any connection to the network application itself. This increases the security level and protects the port generator against manipulations.

According to a third aspect, the invention provides a computer program product comprising executable program code configured to, when executed, perform the method according to any embodiment of the second aspect. According to another aspect, the invention also provides a non-transitory computer-readable data storage medium comprising executable program code configured to, when executed, perform the method according to any embodiment of the second aspect. According to yet another aspect, the invention also provides a data stream comprising, or configured to generate, executable program code configured to, when executed, perform the method according to any embodiment of the second aspect.

According to a fourth aspect, the invention provides a server configured for use in any embodiment of the system according to the first aspect and/or for use in any embodiment of the method according to the second aspect. In particular, the invention provides a server wherein at least one first port generator is installed directly on the server, and wherein the at least one first port generator is configured to generate, based on a time information, a new port number for processing at least one software application.

According to a fifth aspect, the invention provides a client configured for use in any embodiment of the system according to the first aspect and/or for use in any embodiment of the method according to the second aspect. In particular, the invention provides a client wherein at least one second port generator is installed directly on the client, and wherein the at least one second port generator is configured to generate a new port number for processing at least one software application based on a time information.

According to a sixth aspect, the invention provides a port number generator configured for use in any embodiment of the system according to the first aspect and/or in any embodiment of the method according to the second aspect and/or in any embodiment of the server according to the third aspect and/or in any embodiment of the client according to the fourth aspect of the present invention. In particular, the port number generator may be configured to be directly installed on, or remotely connected to, a server (in particular a server according to an embodiment of the fourth aspect) or a client (in particular a client according to an embodiment of the fifth aspect), and to generate, based on a time information, a new port number for processing at least one software application.

The server according to the fourth aspect, the client according to the fifth aspect and the port number generator according to the sixth aspect may be employed advantageously together in any embodiment of the system according to the first aspect and/or in any embodiment of the method according to the second aspect, including any option, variants, modifications or refinements described herein.

Additional features, aspects and advantages of the invention or of its embodiments will become apparent on reading the detailed description in conjunction with the following figures:
- Fig. 1: provides a schematic overview of the system according to a first aspect of the present invention;
- Fig. 2: provides a schematic diagram of a processing step according to a second aspect of the present invention;
- Fig. 3: provides a schematic diagram of a further processing step;
- Fig. 4: provides a schematic flow diagram illustrating an embodiment of a method according to the second aspect of the present invention;
- Fig. 5: schematically illustrates a computer program product according to an embodiment of the third aspect of the invention.

In the following description, for purposes of explanation and not limitation, specific details are set forth in order to provide a thorough understanding of the present invention. It will be apparent to one skilled in the art that the present invention may be practiced in other implementations that depart from these specific details.

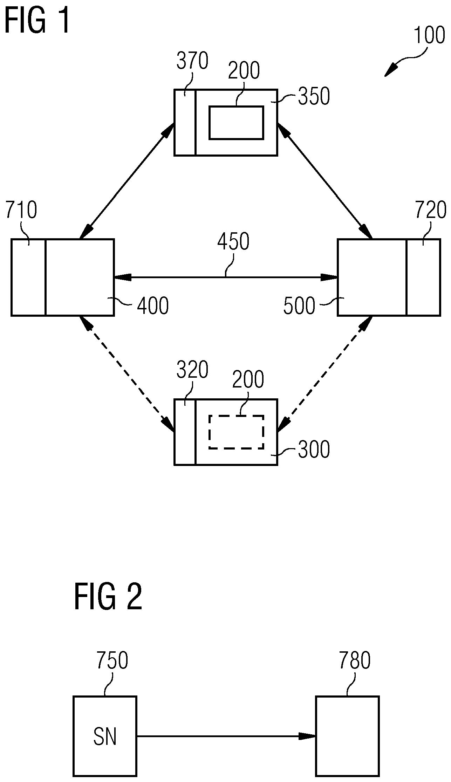

In Fig. 1 shows a schematic overview of the system 100 for dynamic port assignment. A software or network application 200 is processed on a port 300 with a port number 320. The port 300 is connected to at least one server 400 and at least one client 500. The server 400 can be configured as a computer program or a device that provides functionality for the client(s) 500. Such an architecture is called client-server model, and a single overall computation is distributed across multiple processes or devices. The server(s) 400 can provide various functionalities and services, such as sharing data or resources among multiple clients 500, or performing computation for a client 500. A single server 400 can serve multiple clients 500, and a single client 500 can use multiple servers 400. Typical servers 400 are database servers, file servers, mail servers, print servers, web servers, game servers, and application servers. The client-server system may be implemented by the request-response model: a client 500 sends a request to the server 400, which performs some action and sends a response back to the client 500, typically with a result or acknowledgement.

According to the present invention a new port 350 as a replacement of the previous port 300 is generated by a port generator 710, 720 which can use a Time-Based One-Time Password algorithm (TOTP) or similar methods. TOTP is based on a Keyed-Hash Message Authentication Code (HMAC). However, for the generation of new ports 350 also other methods can be used. In cryptography, an HMAC is a specific type of Message Authentication Code (MAC) involving a cryptographic hash function and a secret cryptographic key. It may be used to simultaneously verify both the data integrity and the authentication of a message.

A first port generator 710 is implemented on the server 400 and a second port generator 720 is implemented on a client 500. On the server 400 more than one port generator 710 can be installed and connected to multiple clients 500. For example, four port generators 710 may be installed on the server 400 and three port generators 720 on a client 500 for three servers 400. Furthermore, multiple instances of the software application are possible. Multiple clients 500 can connect to the same software application via the new port 350.

The port generators 710, 720 for generating new ports 350 with a new port number 370 can be configured as a plugin module installed on the server 400 and the client 500. Thus, for example on a Linux server 400 the port generator 710 can work together with iptables to establish a new port 350. Iptables is a user-space utility program that allows a system administrator to configure the tables provided by the Linux kernel firewall. In another embodiment, the port generators 710, 720 can be configured as a service application or as stand-alone modules. They can also be integrated in a firewall. In a further embodiment, the port generators 710, 720 can be integrated in a remote connection application. This eliminates the need to install a separate software application on existing server(s) 400 and client(s) 500.

The first port generator 710 is processed at the server 400 and the second port generator 720 is processed at the client 500. The new port number 370 is assigned dynamically when a connection 450 between the server 400 and the client 500 is established. To make sure that the same new port number 370 is generated by the server 400 and the client 500, the time must be synchronized so that the first port generator 710 and the second port generator 720 generate the same new port number 370 at the same time. Then only the server and the client 500 know the new port 350 on which the software application 200 is processed.

The new port number 370 should be taken from a non-privileged port area to avoid conflicts with other applications.

In the following the processing steps for the generation of new ports 350 are described.

As illustrated in Fig. 2, a random string (seed) 750 with a serial number, SN, is generated and assigned to a user 780. A string 750 is considered as a data type and can have any sequence of elements and data structures. Typically, the lifetime of the string 750 is in the range of 5 minutes.

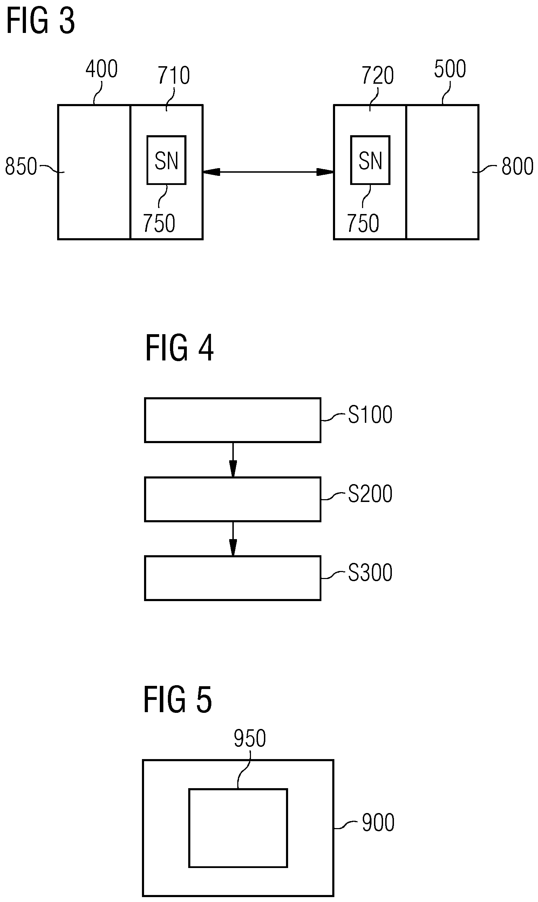

As illustrated in Fig. 3, the string 750 with the serial number, SN, is installed at the first port generator 710 on the server 400 and at the second port generator 720 on the client 500.
The port generator 710 on the server 400 and the port generator 720 on the client 500 use the string 750 for generating at the absolute time T, for example at 12:05, the new port number 370, for example "32654".

The communication between the client 500 and the server 400 runs on the new port 350 which is only known by the two participants, the server 400 and the client 500. At time T, for example at 12:06, the user 780 opens the URL "https://server: 443" in the web browser 800. However, the link is rewritten to "https://server: 32654" by the port generator 710 installed on the server 400 and the port generator 720 installed on the client 500.

The port generator 710 on the server 400 is linked to the port 350 with the port number "32654" and forwards the traffic to a web server 850 such as an apache web server. Therefore, the apache web server 850 is determined to only communicate with the software application 200.

After a specific lifetime a following new port is generated and the previous new port 350 is deleted. The port generators 710, 720 can automatically generate a following new port. Typically, the lifetime of the previous new port is in the range of between 1 and 20 minutes, preferably between 2 and 10 minutes, most preferably 5 minutes. However, to avoid communication interrupt, different measures can be used. It could be possible that as soon as the communication established on port 350 with the port number "32654", the lifetime of this port 350 will be extended until the communication is closed. But no new connection to the port 350 with the port number "32654" is allowed.

It is also possible to generate a new port number 370 at or based on certain time intervals. For example, every couple of minutes, e.g. 5 minutes, a new port number 370 may be generated. In advantageous refinements, once a port number is assigned for a certain application it may not be changed any more once a session is established.

Additionally, the time information based on which the new port number 370 is created may be based on time intervals of a certain length, wherein these time intervals may be identical to the time intervals at which new port numbers 370 are generated, e.g. also 5 minutes. For example, during the time between 18:00h and 18:05 the time information of 18:00h is used to create the new port number 370.

In a further embodiment, the server 400 can use the serial number, SN, of the string 750 to identify the user 780 and may grant appropriate authorization.

The present invention provides a dynamic port assignment. This allows to protect a network application such as a web server, a SQL database etc. more securely. TOTP is an algorithm to generate a one-time password without any connection to the network application itself. According to the present invention the new port number 370 generated by the port generators 710, 720 is only time dependent, but does not give any hint on which new port 350 the network application 200 is processed.

Furthermore, the present invention allows multiple clients 500 to access the same network application by using different dynamic unified port numbers 370. The dynamic port generation procedure is the same as mentioned before. The difference is that multiple port generators 710 are running on the server 400.

In addition, the present invention allows also multiple network applications running at the same time on the server 400, e.g. Web Server and SSH Server. Each application can be protected by one or more port generator 710 to serve multiple clients 500.

Even if a network application needs more than one connection between a server 400 and a client 500, the present invention can protect each connection by using the mechanism according to the present invention.

A port scanner can detect the new port 350, however the new port 350 will be replaced after a certain amount of time with another following port. In addition, a port scanner can be easily blocked with conventional firewall.

In a further embodiment, the dynamic port assignment according to the present invention can also change an existing port 300 by using the port generators 710, 720. When the port number 320 is generated via the port generators 710, 720 by a string (seed) 750, the system 100 can treat the seed 750 as a user-ID and can grant an appropriate authorization. For example, if in the server 400 or another database is stored that the port 300 has the number "5712", then server 400 knows the port 300 is generated by a seed 750 with the number "12" and number "12" is assigned to a specific user 748 like David Smith. Then the server 400 can determine a certain database area for him. Therefore, not only the software application 200 can be hidden, but also users 780 can be identified.

In Fig. 4 the processing steps of the method according to the present invention are illustrated.

In a step S100, a first port generator 710 is installed directly and/or remotely on the server 400 and a second port generator 720 is installed directly and/or remotely on the server.

In a step S200, a new port 350 with a new port number 370 is generated simultaneously at the same time by the first port generator 710 and the second port generator 720.

In a step S300 the at least one software application 200 is processed on the new port 350 with the new port number 370.

Fig. 5 schematically illustrates a computer program product 900 comprising executable program code 950 configured to, when executed, perform the method according to the second aspect of the present invention.

Therefore, according to the present invention a software application 200 can run independently of predefined ports. The dynamic port assignment can better protect the software application 200 as a third person does not know on which port the software application 200 is processed.

## Claims

1. A system (100) for processing at least one software application (200) via at least one port (300) with a port number (320), the system (100) comprising at least one server (400) and at least one client (500) which are connected to the port (300), wherein at least one first port generator (710) is installed directly on and/or remotely connected to the server (400) and at least one second port generator (720) is installed directly on and/or remotely connected to the client (500), wherein the first port generator (710) and the second port generator (720) are configured to generate based on a time information a new port number (370) for processing the at least one software application (200).

2. The system (100) as claimed in claim 1, wherein the lifetime of the new port (350) is in the range of between 1 and 20 minutes and/or the time information is the same and/or identical time information for the first port generator (710) and the second port generator (720).

3. The system (100) as claimed in claim 1 or 2, wherein a random string or seed (750) with a serial number (SN) is generated and assigned to a user (780).

4. The system (100) as claimed in any one of claims 1 to 3, wherein the string (750) with the serial number (SN) is installed at the first port generator (710) on the server (400) and at the second port generator (720) on the client (500).

5. The system (100) as claimed in claim 4, wherein the port generator (710) on the server (400) and the port generator (720) on the client (500) are configured to use the string (750) for generating at the same absolute time the new port (350) with the new port number (370).

6. The system (100) as claimed in any one of claims 1 to 5, wherein the server (400) and the client (500) are connected by a connection (450), wherein the server (400) and the client (500) may be synchronized by using the connection (450).

7. The system (100) of any one of claim 1 to 6, wherein a Time-Based One-Time Password Algorithm (TOTP) is used as an algorithm for the port generators (710, 720).

8. A method for processing at least one software application (200) via at least one port (300) with a port number (320) of a system (100), the system (100) comprising at least one server (400) and at least one client (500) which are connected to the port (300), comprising
- installing (S100) a first port generator (710) directly on and/or remotely connected to the server (400) and a second port generator (720) directly on and/or remotely connected the client (500);
- generating (S200) a new port (350) with a new port number (370) by the first port generator (710) and the second port generator (720) based on a time information;
- processing (S300) the at least one software application (200) on the new port (350) with the new port number (370) .

9. The method as claimed in claim 8, wherein the lifetime of the new port (350) is in the range of between 1 and 20 minutes and/or the time information is the same and/or identical time information for the first port generator (710) and the second port generator (720).

10. The method as claimed in claim 8 or 9, wherein a random string or seed (750) with a serial number (SN) is generated and assigned to a user (780).

11. The method as claimed in any one of claims 8 to 10, wherein the string (750) with the serial number (SN) is installed at the first port generator (710) on the server (400) and at the second port generator (720) on the client (500).

12. The method as claimed in claim 11, wherein the port generator (710) on the server (400) and the port generator (720) on the client (500) are configured to use the string (750) for generating at the same absolute time the new port (350) with the new port number (370).

13. The method as claimed in any one of claims 8 to 12, wherein the server (400) and the client (500) are connected by a connection (450), wherein the server (400) and the client (500) may be synchronized by using the connection (450).

14. The method of any one of claim 8 to 13, wherein a Time-Based One-Time Password Algorithm (TOTP) is used as an algorithm for the port generators (710, 720).

15. A non-transitory computer-readable data storage medium (900) comprising executable program code (950) configured to, when executed, perform the method according to any one of claims 8 to 14.
